# EUROPÄISCHE PATENTSCHRIFT

(11) **EP 2 665 542 B1**
(45) Veröffentlichungstag und Bekanntmachung des Hinweises auf die Patenterteilung: **19.11.2014**
(21) Anmeldenummer: 11805447.7
(22) Anmeldetag: 12.12.2011
(51) Int. Cl.: B01D 53/14

(54) **VERFAHREN UND VORRICHTUNG ZUR REDUZIERUNG VON NITROSAMINEN, DIE SICH BEI EINER CO2-ENTFERNUNG VON RAUCHGASEN MITTELS EINER WÄSSRIGEN AMINLÖSUNG BILDEN**
METHOD AND DEVICE FOR REDUCING NITROSAMINES WHICH FORM DURING REMOVAL OF CO2 FROM FLUE GASES USING AN AQUEOUS AMINE SOLUTION
PROCEDE ET DISPOSITIF POUR RÉDUIRE LA CONCENTRATION DE NITROSAMINES FORMEES LORS DE L'ELIMINATION DU CO2 DE FUMEES PAR UNE SOLUTION AQUEUSE D'AMINE

(30) Priorität: 21.01.2011 DE 102011000268
(43) Veröffentlichungstag der Anmeldung: 27.11.2013
(73) Patentinhaber: ThyssenKrupp Uhde GmbH, 44141 Dortmund (DE)
(72) Erfinder: MENZEL, Johannes, 45731 Waltrop (DE)
(74) Vertreter: Albrecht, Rainer Harald
(86) Internationale Anmeldenummer: PCT/EP2011/072469
(87) Internationale Veröffentlichungsnummer: WO 2012/097920

(56) Entgegenhaltungen:
- WO-A1-2008/025743
- WO-A1-2010/102877
- WO-A1-2011/100801
- US-A- 5 847 129

## Beschreibung

Die Erfindung betrifft ein Verfahren zur Reduzierung von Nitrosaminen, die sich bei einer CO₂-Entfernung aus Rauchgasen mittels einer wässrigen Aminlösung bilden.

Aus der Literatur ist bekannt, dass sich bei der CO₂-Entfernung aus Rauchgasen aus Kraftwerken, die mit fossilen Brennstoffen befeuert werden, Nitrosamine bilden. Die Nitrosamine resultieren aus Reaktionen der im Rauchgas befindlichen NOx-Gaskomponenten und den im Lösungsmittel für die CO₂-Wäsche enthaltenen Aminen. Nach bisher vorliegenden Erkenntnissen laufen diese Reaktionen bevorzugt mit sekundären Aminen ab, die bei technisch hergestellten Aminen stets vorhanden sind. Des Weiteren bilden primäre Amine mit dem im Rauchgas vorhandenen Sauerstoff Zersetzungsprodukte, die u. a. auch sekundäre Amine umfassen. Es kann daher als sicher gelten, dass sich Nitrosamine in der wässrigen Aminlösung bilden und auch akkumulieren, unabhängig davon, ob primäre, sekundäre oder tertiäre Amine für die CO₂-Wäsche eingesetzt werden.

Nitrosamine gelten als krebserregende Substanzen. Es muss daher sichergestellt werden, dass der Gehalt der in der Aminlösung enthaltenen Nitrosamine so weit begrenzt wird, dass die Nitrosaminverbindungen nicht mit dem Rauchgas aus der CO₂-Wäsche ausgetragen werden. Solange die Nitrosaminkonzentration in der Aminlösung gering ist, wird durch eine in der CO₂-Absorptionskolonne installierte Nachwaschstufe stets sichergestellt, dass die Nitrosamine zurückgewaschen werden und in der Lösung verbleiben. Steigt die Nitrosaminkonzentration jedoch weiter an, besteht die Gefahr, dass Nitrosamine in das Kraftwerksabgas gelangen können.

Es ist bekannt, dass Nitrosamine sich in der Atmosphäre zersetzen, was die Umweltgefährdung reduziert. Allerdings ist fraglich, ob sich die Nitrosamine in der Atmosphäre ausreichend schnell zersetzen. Gegenüber dem Abgas, das im Wesentlichen aus Stickstoff besteht, besitzen die Nitrosamine ein wesentlich höheres Molekulargewicht mit entsprechend hohem Siedepunkt und haben daher die Tendenz, auf den Boden abzusinken, da sie schwerer als Luft sind. Sowohl aus Gesundheitsschutzgründen als auch Umweltschutzgründen ist daher sicherzustellen, dass keine Notrosamine aus dem Lösungsmittelkreislauf in die Umgebung gelangen. Das kann, wie zuvor erläutert, erreicht werden, wenn die Konzentration von Nitrosaminen im Lösungsmittelkreislauf begrenzt und ein ungehinderter Anstieg in der Aminlösung verhindert wird.

Vor diesem Hintergrund liegt der Erfindung die Aufgabe zugrunde, ein technisch einfaches und zuverlässiges Verfahren anzugeben, um die Konzentration der Nitrosamine, die sich bei einer CO₂-Entfernung aus Rauchgas mittels einer wässrigen Aminlösung bilden, zu reduzieren und deren Akkumulierung in der Waschflüssigkeit zu verhindern.

Gegenstand der Erfindung und Lösung dieser Aufgabe ist ein Verfahren nach Anspruch 1. Erfindungsgemäß wird eine Teilmenge der mit Nitrosaminen beladenen wässrigen Aminlösung aus einem Waschflüssigkeitskreislauf abgezweigt und durch Verdampfen von Wasser und niedrig siedenden Bestandteilen aufkonzentriert. Die aufkonzentrierte Aminlösung verweilt anschließend bei Siedetemperatur in einem Apparat, in dem eine flüssige Phase und eine dampfförmige Phase im Kontakt stehen und sich ein Dampfflüssigkeitsgleichgewicht zwischen den Phasen einstellt. Die dampfförmige Phase wird innerhalb des Apparates mit UV-Licht bestrahlt, welches in die dampfförmige Phase übergehende Nitrosamine zersetzt. Nach der Behandlung kann die konzentrierte und von Nitrosaminen weitgehend befreite Aminlösung in den Waschflüssigkeitskreislauf zurückgeführt werden.

Das erfindungsgemäße Verfahren macht sich die Erkenntnis zu nutze, dass Nitrosamine durch Einwirkung von UV-Licht zersetzt werden. Hierbei ist allerdings zu berücksichtigen, dass die für die Nitrosaminzersetzung benötige Verweilzeit bzw. Einwirkdauer der UV-Bestrahlung groß ist und der Siedepunkt der gebildeten Nitrosamine deutlich höher ist als der Siedepunkt des Lösungsmittels, so dass innerhalb eines Aminwäschers nur eine geringe Konzentration von Nitrosaminen dampfförmig vorliegt. Erfindungsgemäß wird die UV-Bestrahlung daher auf eine Flüssigkeitsmenge beschränkt, die aus dem Waschflüssigkeitskreislauf abgezweigt und vor der UV-Bestrahlung durch Verdampfen von Wasser und niedrig siedenden Bestandteilen stark aufkonzentriert wird. Durch die der UV-Bestrahlung vorausgehende Aufkonzentrierung der Aminlösung gelangen die schwer flüchtigen Nitrosamine in einer deutlich höheren Konzentration in die Dampfphase, wo sie dann der UV-Strahlung ausgesetzt und zersetzt werden. Die flüssige Phase und die dampfförmige Phase stehen während der UV-Bestrahlung der Dampfphase in einem Dampf/Flüssigkeitsgleichgewicht. Dadurch, dass die verdampften Nitrosaminmoleküle vom UV-Licht zersetzt werden, verschwinden sie aus der Dampfhase, so dass über die Neueinstellung des Dampfflüssigkeitsgleichgewichtes neue Nitrosaminmoleküle aus der Flüssigphase in die Dampfphase gelangen. Auf diese Weise ist es möglich, bei einer ausreichend langen Haltezeit den größten Teil der in der aufkonzentrierten Aminlösung befindlichen Nitrosaminmoleküle zu zersetzen.

Das erfindungsgemäße Verfahren kann so geführt werden, dass durch eine UV-Bestrahlung der dampfförmigen Phase innerhalb des Apparates Nitrosamine in einer Menge zersetzt werden, die mindestens der Menge entspricht, die infolge einer Gaswäsche des Rauchgases neu gebildet werden.

Die Dämpfe, die beim Aufkonzentrieren der mit Nitrosaminen beladenen Aminlösung anfallen, werden in den Waschflüssigkeitskreislauf zurückgeführt. Durch Druckentspannung der Dämpfe können sie in den Sumpf der Regenerationskolonne eingeleitet werden. Die Dämpfe können auch kondensiert und als Kondensat dem Flüssigkeitskreislauf zugeführt werden. Die Verdampfung und anschließende UV-Bestrahlung kann bei Überdruck oder alternativ auch bei einem Druck von weniger als 1 bar betrieben werden.

Der Anspruch 5 beschreibt eine bevorzugte Ausführung des erfindungsgemäßen Verfahrens. Während einer ersten Betriebsphase wird aus dem Waschflüssigkeitskreislauf ein Teilstrom der mit Nitrosaminen beladenen wässrigen Aminlösung abgezweigt und einem Apparat zugeführt, der einen Behälter zur Aufnahme der Flüssigkeit, einen Brüdenraum sowie einen Verdampfer aufweist. Wasser und niedrig siedende Bestandteile werden aus der in dem Behälter befindlichen Aminlösung verdampft, wobei die Dämpfe in den Waschflüssigkeitskreislauf zurückgeführt werden. Nach Erreichen einer vorgegebenen Aminkonzentration wird der Flüssigkeitszufluss zum Apparat abgesperrt oder zumindest auf einen gegen Null gehenden Grenzwert gedrosselt. Gleichzeitig wird die Heizleistung des Verdampfers so weit reduziert, dass der Betriebsdruck konstant bleibt und die aus dem Verdampfer abgezogene Dampfmenge ebenfalls auf einen Mengenstrom, der gegen den Grenzwert Null geht, reduziert wird. Dieser Betriebszustand wird während der Bestrahlung des Brüdenraums mit UV-Licht beibehalten. Die Haltezeit kann 100 Stunden oder mehr betragen, wobei eine Haltezeit von etwa 10 bis 20 Stunden im Allgemeinen ausreichend ist. Bei einer ausreichend langen Haltezeit von z. B. 10 bis 20 Stunden ist es möglich, den größten Teil der in der konzentrierten Aminlösung enthaltenen Nitrosaminmoleküle zu zersetzen.

Die erste Betriebsphase dient im Wesentlichen dazu, das in der Aminlösung vorhandene Wasser zu verdampfen. Die erste Betriebsphase beschreibt einen instationären Verdampfungsprozess. Hieran schließt sich ein semikontinuierlicher Betrieb an, bei dem genau die Menge an Lösung verdampft wird, die dem Apparat zugeführt wird. Schwerflüchtige Verbindungen sammeln sich in der Flüssigphase an. Im semikontinuierlichen Zustand sind die Massenanteile des Amins in der Dampfphase (in Gew.-% gemessen) und der Amin-Mengenstrom, der dem Apparat mit dem aus dem Waschflüssigkeitskreislauf abgezweigten Flüssigkeitsstrom zugeführt wird, gleich. Dies führt zu einem Anstieg der Aminkonzentration in der im Apparat befindlichen Lösung. Dadurch, dass der Siedepunkt der Amine ebenso wie der Siedepunkt der Nitrosamine deutlich höher ist als der von Wasser, stellt sich mit der höheren Aminkonzentration im semikontinuierlichen Zustand eine höhere Siedetemperatur der Lösung ein. Die erste Betriebsphase zur Konzentrierung der Aminlösung wird vorzugsweise so lange beibehalten, bis der mit dem Dampf abgezogene Amin-Mengenstrom in etwa dem Aminmengenstrom entspricht, der dem Apparat mit dem aus dem Waschflüssigkeitskreislauf abgezweigten Flüssigkeitsstrom zugeführt wird. Es stellt sich dann die höchste Nitrosaminkonzentration in der Dampfphase ein.

Mit dem erfindungsgemäßen Verfahren ist es möglich, auf einfache und zuverlässige Weise die sich in der Aminlösung bildenden Nitrosamine auf einem niedrigen Konzentrationslevel zu halten. Das erfindungsgemäße Verfahren zur Nitrosaminzersetzung durch UV-Bestrahlung kann auch in Apparaten durchgeführt werden, die zur Entfernung von schwer siedenden Zersetzungsprodukten vorgesehen sind. Diese Apparate, die auch als Reclaimerunits bezeichnet werden, werden semikontinuierlich betrieben, und zwar je nach Auslegung über einen Zeitraum von z.B. 100 bis 200 Stunden. Sie können zusätzlich zur von Nitrosaminen mit einer Einrichtung zur UV-Bestrahlung ausgestattet werden. Eine für das Zersetzen von Nitrosaminen zusätzliche Haltedauer von z.B. 20 Stunden fällt bei der semikontinuierlichen Betriebsweise der beschriebenen Apparate, nicht ins Gewicht und hat auch keinen sonderlich großen Einfluss auf die Apparatgröße. Das erfindungsgemäße Verfahren stellt eine kostengünstige Möglichkeit dar, um Reclaimerunits, die nach dem Verdampferprinzip arbeiten und zur Reinigung der Aminlösung von schwer siedenden Komponenten ausgelegt sind, mit einer Zusatzfunktion auszustatten.

Gegenstand der Erfindung ist auch eine Anlage nach Anspruch 8 zur Durchführung des beschriebenen Verfahrens. Die Anlage umfasst erfindungsgemäß einen Gaswäscher zur Entfernung von CO₂ aus Rauchgasen mittels einer wässrigen Am inlösung, einen dem Gaswäscher zugeordneten Waschflüssigkeitskreislauf sowie einen Apparat zur Entfernung von Nitrosaminen, die sich bei einer Aminwäsche des Rauchgases bilden. Der Apparat weist einen geschlossenen Behälter mit einem Flüssigkeitsraum, einem Brüdenraum und einen Verdampfer auf und ist an den Waschflüssigkeitskreislauf angeschlossen. Erfindungsgemäß ist der Brüdenraum mit einer Einrichtung zur Bestrahlung der dampfförmigen Phase mit UV-Licht ausgestattet.

## Patentansprüche

1. Verfahren zur Reduzierung von Nitrosaminen, die sich bei einer CO₂-Entfernung von Rauchgasen mittels einer wässrigen Aminlösung bilden,
wobei eine Teilmenge der mit Nitrosaminen beladenen wässrigen Aminlösung aus einem Waschflüssigkeitskreislauf abgezweigt und durch Verdampfen von Wasser und niedrig siedenden Bestandteilen aufkonzentriert wird,
wobei die aufkonzentrierte Aminlösung bei Siedetemperatur in einem Apparat verweilt, in dem eine flüssige Phase und eine dampfförmige Phase in Kontakt stehen und sich ein Dampf/Flüssigkeitsgleichgewicht zwischen den Phasen einstellt,
wobei die dampfförmige Phase innerhalb des Apparates mit UV-Licht bestrahlt wird, welches in die dampfförmige Phase übergehende Nitrosamine zersetzt, und
wobei die konzentrierte Aminlösung nach der Behandlung im Apparat in den Waschflüssigkeitskreislauf zurückgeführt wird.

2. Verfahren nach Anspruch 1, **dadurch gekennzeichnet, dass** durch eine UV-Bestrahlung der dampfförmigen Phase innerhalb des Apparates Nitrosamine in einer Menge zersetzt werden, die mindestens der Menge entspricht, die bei der Gaswäsche des Rauchgases neu gebildet wird.

3. Verfahren nach Anspruch 1 oder 2, **dadurch gekennzeichnet, dass** die Dämpfe, die beim Aufkonzentrieren der mit Nitrosaminen beladenen Aminlösung anfallen, in den Waschflüssigkeitskreislauf zurückgeführt werden.

4. Verfahren nach einem der Ansprüche 1 bis 3, **dadurch gekennzeichnet,**
**dass** während einer ersten Betriebsphase aus dem Waschflüssigkeitskreislauf ein Teilstrom der mit Nitrosaminen beladenen wässrigen Aminlösung abgezweigt und einem Apparat zugeführt wird, der einen Behälter zur Aufnahme der Flüssigkeit, einen Brüdenraum sowie einen Verdampfer aufweist,
**dass** Wasser und niedrig siedende Bestandteile aus der in dem Behälter befindlichen Aminlösung verdampft werden, wobei die Dämpfe in den Waschflüssigkeitskreislauf zurückgeführt werden,
**dass** nach Erreichen einer vorgegebenen Aminkonzentration der Flüssigkeitszufluss zum Apparat abgesperrt oder auf einen gegen Null gehenden Grenzwert gedrosselt sowie die Heizleistung des Verdampfers so weit reduziert wird, dass der Betriebsdruck konstant bleibt und die aus dem Verdampfer abgezogene Dampfmenge auf einen Mengenstrom, der gegen den Grenzwert Null geht, reduziert wird, und
**dass** dieser Betriebszustand während einer Bestrahlung des Brüdenraumes mit UV-Licht beibehalten wird.

5. Verfahren nach Anspruch 4, **dadurch gekennzeichnet, dass** die erste Betriebsphase so lange beibehalten wird, bis der mit dem Dampf abgezogene Amin-Mengenstrom in etwa dem Amin-Mengenstrom entspricht, der dem Apparat mit dem aus dem Waschflüssigkeitskreislauf abgezweigten Flüssigkeitsstrom zugeführt wird.

6. Verfahren nach Anspruch 4 oder 5, **dadurch gekennzeichnet, dass** der Betriebszustand für eine UV-Bestrahlung des Brüdenraumes über einen Zeitraum von bis zu 100 Stunden, vorzugweise 30 Minuten bis 30 Stunden, beibehalten wird.

7. Verfahren nach einem der Ansprüche 4 bis 6, **dadurch gekennzeichnet, dass** der Apparat zusätzlich zur Abtrennung von schwer siedenden Verunreinigungen aus der Arminlösung verwendet wird.

8. Anlage zur Durchführung des Verfahrens nach einem der Ansprüche 1 bis 7, mit
einem Gaswäscher zur Entfernung von CO₂ aus Rauchgasen mittels einer wässrigen Aminlösung,
einem dem Gaswäscher zugeordneten Waschflüssigkeitskreislauf und
einem Apparat zur Entfernung von Nitrosaminen, die sich bei einer Aminwäsche des Rauchgases bilden,
wobei der Apparat einen geschlossenen Behälter mit einem Flüssigkeitsraum, einem Brüdenraum und einen Verdampfer aufweist und an den Waschflüssigkeitskreislauf angeschlossen ist und wobei der Brüdenraum mit einer Einrichtung zur Bestrahlung der dampfförmigen Phase mit UV-Licht ausgestattet ist.

## Claims

1. A method for reducing nitrosamines that are formed during the removal of CO₂ from flue gases by means of an aqueous amine solution,
wherein a portion of the aqueous amine solution charged with nitrosamines is branched off from a washing liquid cycle and concentrated by evaporating water and low-boiling components,
wherein the concentrated amine solution remains at boiling point in an apparatus in which a liquid phase and a vapour phase are in contact and a vapour/liquid equilibrium is established between the phases,
wherein the vapour phase within the apparatus is irradiated with UV light which decomposes nitrosamines moving into the vapour phase and
wherein the concentrated amine solution is returned to the washing liquid cycle following treatment in the apparatus.

2. The method according to claim 1, **characterized in that** through UV irradiation of the vapour phase within the apparatus, nitrosamines are decomposed in an amount at least corresponding to the amount that is newly formed during the scrubbing of the flue gas.

3. The method according to claim 1 or 2, **characterized in that** the vapours which are obtained during concentration of the amine solution charged with nitrosamines are returned to the washing liquid cycle.

4. The method according to one of the claims 1 to 3, **characterized in that**
during a first operating phase a partial flow of the aqueous amine solution charged with nitrosamines is branched off from the washing liquid cycle and fed to an apparatus which has a container to receive the liquid, a vapour chamber and an evaporator,
water and low-boiling constituents are evaporated from the amine solution found in the container, wherein the vapours are returned to the washing liquid cycle,
after reaching a predetermined amine concentration, the liquid supply to the apparatus is shut off or throttled to a threshold value approaching zero and the heat output of the evaporator is reduced until the operating pressure remains constant and the amount of vapour drawn from the evaporator is reduced to a mass flow approaching the threshold value zero and
this operating state is retained during irradiation of the vapour chamber with UV light.

5. The method according to claim 4, **characterized in that** the first operating phase is retained until the amine mass flow drawn off with the vapour roughly corresponds to the amine mass flow which is supplied to the apparatus with the liquid flow branched off from the washing liquid cycle.

6. The method according to claim 4 or 5, **characterized in that** the operating state for UV irradiation of the vapour chamber is retained for a period of up to 100 hours, preferably 30 minutes to 30 hours.

7. The method according to one of the claims 4 to 6, **characterized in that** the apparatus is used in addition to separate heavy-boiling impurities from the amine solution.

8. The installation for carrying out the method according to one of the claims 1 to 7 comprising
a gas scrubber for removing CO₂ from flue gases by means of an aqueous amine solution,
a washing liquid cycle assigned to the gas scrubber and
an apparatus for removing nitrosamines which are formed during amine scrubbing of the flue gas,
wherein the apparatus has a closed container with a liquid chamber, a vapour chamber and an evaporator and is attached to the washing liquid cycle and wherein the vapour chamber is equipped with a device for irradiating the vapour phase with UV light.

## Revendications

1. Procédé destiné à réduire des nitrosamines qui se forment lors d'une élimination du CO₂ hors de gaz de fumée au moyen d'une solution aqueuse d'amines
lors duquel on fait dériver une quantité partielle de la solution aqueuse d'amines chargée de nitrosamines hors d'un circuit de liquide d'épuration et on la concentre par évaporation d'eau et de composants à point d'ébullition bas,
la solution aqueuse d'amines concentrée séjournant à température d'ébullition dans un appareil dans lequel une phase liquide et une phase vapeur sont en contact et un équilibre vapeur/eau s'établissant entre les phases,
lors duquel, à l'intérieur de l'appareil, on irradie la phase vapeur avec de la lumière UV qui décompose les nitrosamines qui passent dans la phase vapeur et
lors duquel, après le traitement dans l'appareil, on recycle la solution d'amines concentrée dans le circuit de liquide d'épuration.

2. Procédé selon la revendication 1, **caractérisé en ce que** par une irradiation avec des UV de la phase vapeur à l'intérieur de l'appareil, on décompose les nitrosamines dans une quantité qui correspond au moins à la quantité qui se forme spontanément lors du lavage des gaz de fumée.

3. Procédé selon la revendication 1 ou la revendication 2, **caractérisé en ce qu'**on recycle dans le circuit de liquide d'épuration les vapeurs qui se produisent lors de la concentration de la solution d'amines chargée de nitrosamines.

4. Procédé selon l'une quelconque des revendications 1 à 3, **caractérisée**
**en ce que** pendant une première phase de service, on fait dériver du circuit de liquide d'épuration un flux partiel de la solution aqueuse d'amines chargée de nitrosamines et on l'amène vers un appareil qui comporte un réservoir destiné à recevoir le liquide, un compartiment à buées, ainsi qu'un évaporateur,
**en ce qu'**on fait évaporer l'eau et des composants à point d'ébullition bas hors de la solution d'amines qui se trouve dans le réservoir, les vapeurs étant recyclées dans le circuit de liquide d'épuration,
**en ce qu'**après l'obtention d'une concentration d'amines prédéfinie, on bloque l'afflux de liquide vers l'appareil ou on le réduit à une valeur limite proche de zéro et on réduit la puissance de chauffe de l'évaporateur jusqu'à ce que la pression de service reste constante et on réduit la quantité de vapeur soutirée hors de l'évaporateur à un flux massique proche de la valeur limite zéro et
**en ce qu'**on maintient cet état de service pendant une irradiation du compartiment à buées avec de la lumière UV.

5. Procédé selon la revendication 4, **caractérisé en ce qu'**on maintient la première phase de service jusqu'à ce que le flux massique d'amines soutiré avec la vapeur corresponde approximativement au flux massique d'amines qui est amené vers l'appareil avec le flux de liquide dérivé du circuit de liquide d'épuration.

6. Procédé selon la revendication 4 ou la revendication 5, **caractérisé en ce qu'**on maintient l'état de service pour une irradiation par UV du compartiment à buées sur une période de jusqu'à 100 heures, de préférence de 30 minutes à 30 heures.

7. Procédé selon l'une quelconque des revendications 4 à 6, **caractérisé en ce qu'**on utilise l'appareil en supplément pour séparer des impuretés à point d'ébullition élevé de la solution d'amines.

8. Installation destinée à réaliser le procédé selon l'une quelconque des revendications 1 à 7, avec
un épurateur de gaz destiné à éliminer du CO₂ hors de gaz de fumées au moyen d'une solution aqueuse d'amines,
un circuit de liquide d'épuration associé à l'épurateur de gaz et
un appareil destiné à éliminer les nitrosamines qui se forment lors d'une épuration du gaz de fumées,
l'appareil comportant un réservoir fermé avec un compartiment à liquide, un compartiment à buées et un évaporateur et étant raccordé sur le circuit de liquide d'épuration et l'espace à buées étant équipé d'un système d'irradiation de la phase vapeur avec de la lumière UV.
